# EUROPEAN PATENT APPLICATION

(11) **EP 2 837 433 A2**
(43) Date of publication of application: **18.02.2015**
(21) Application number: 14171261.2
(22) Date of filing: 05.06.2014
(51) Int. Cl.: B06B 1/02

(54) **Capacitive transducer drive device and object information acquiring device**

(30) Priority: 07.06.2013 JP 2013120667
(71) Applicant: CANON KABUSHIKI KAISHA, Ohta-ku Tokyo 146-8501 (JP)
(72) Inventor: Kandori, Atsushi, Tokyo, Tokyo 146-8501 (JP)
(74) Representative: TBK

(57) **Abstract**

Provided is a capacitive transducer drive device capable of adjusting a potential difference applied between electrodes of a cell with a simple configuration. A capacitive transducer to be driven by the drive device includes a cell including: a first electrode (102) included in a vibrating membrane (101); and a second electrode (103) formed to oppose the first electrode through intermediation of a gap (105). One of the first electrode (102) and the second electrode (103) of the cell is electrically connected to a first DC voltage applying unit (201), and the other of the first electrode (102) and the second electrode (103) of the cell is electrically connected to a second DC voltage applying unit (203). A voltage to be applied by the second DC voltage applying unit is set to be lower than a voltage to be applied by the first DC voltage applying unit. The voltage to be applied by the second DC voltage applying unit (203) is variable.

## Description

### BACKGROUND OF THE INVENTION

### Field of the Invention

The present invention relates to a drive device for a capacitive transducer configured to transmit and receive acoustic waves (as used herein, "transmit and receive" means at least one of "transmit" or "receive"), and an object information acquiring device such as an ultrasound image forming device using the drive device. It is to be noted that the acoustic waves as used herein include sound waves, ultrasound waves, and photoacoustic waves. For example, the acoustic waves include a photoacoustic wave that is generated inside an object when the inside of the object is irradiated with light (electromagnetic wave) such as a visible ray and an infrared ray. In the following, the acoustic waves are represented by ultrasound waves in many cases.

### Description of the Related Art

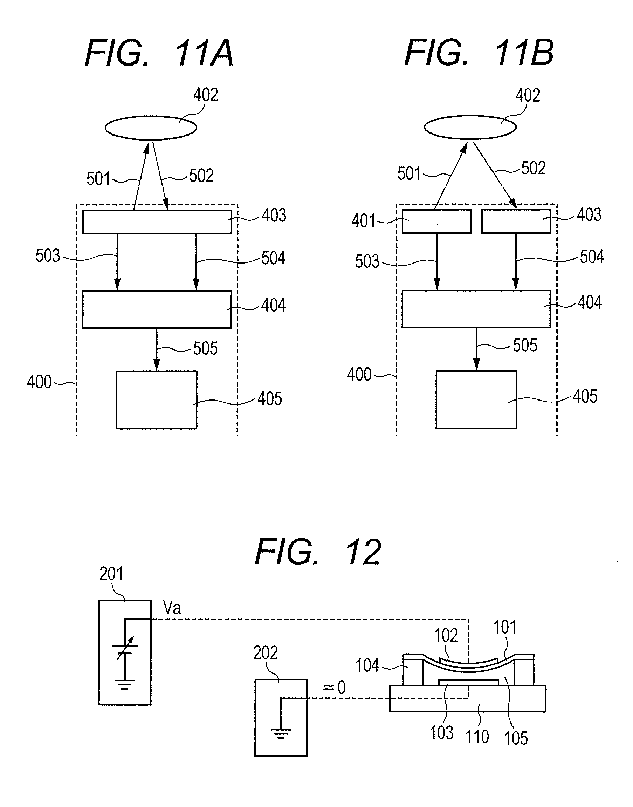

Capacitive micromachined ultrasound transducers (CMUTs) as capacitive ultrasound transducers have been proposed for the purpose of transmitting and receiving ultrasound waves. The CMUT is manufactured with use of a process of micro-electro-mechanical systems (MEMS) based on a semiconductor process. FIG. 12 schematically illustrates a cross section of a CMUT (transmitting and receiving element). A first electrode 102 and a second electrode 103, which are opposed to each other through intermediation of a gap 105, and a vibrating membrane 101 are grouped and hereinafter referred to as "cell". The vibrating membrane 101 is supported by a support portion 104 formed on a substrate 110. The first electrode 102 is connected to a DC voltage applying unit 201 and applied with a predetermined DC voltage Va. The other second electrode 103 is connected to a transceiver circuit 202 and has a fixed potential around the GND potential. With this, a potential difference Vbias (=Va-0 V) is generated between the first electrode 102 and the second electrode 103. The value of Va is adjusted so that the value of Vbias may match with a desired potential difference (about several tens of V to several hundreds of V) determined by mechanical characteristics of the cell. In this configuration, when the transceiver circuit 202 applies an AC drive voltage to the second electrode 103, an AC electrostatic attraction is generated between the first and second electrodes, and hence an ultrasound wave can be transmitted based on vibration of the vibrating membrane 101 at a certain frequency. Further, when the vibrating membrane 101 vibrates in response to an ultrasound wave, a minute current is generated in the second electrode 103 due to electrostatic induction. By measuring the current value by the transceiver circuit, a reception signal can be extracted (see, for example, A. S. Ergun, Y. Huang, X. Zhuang, O. Oralkan, G. G. Yarahoglu, and B. T. Khuri-Yakub, "Capacitive micromachined ultrasound transducers: fabrication technology," Ultrasounds, Ferroelectrics and Frequency Control, IEEE Transactions on, vol. 52, no. 12, pp. 2242-2258, Dec. 2005).

Transceiver characteristics of the CMUT are greatly affected by the potential difference between the first electrode and the second electrode. The mechanical characteristics are slightly different among cells depending on the dimensions and physical property values of the electrodes, the vibrating membrane, and the gap of the CMUT, and hence a desired value (optimum value) of the potential difference between the electrodes is different for each cell to be connected. Adjusting a DC voltage applied to the first electrode to adjust the potential difference between the first electrode and the second electrode, however, needs a complicated circuit with a large mounting area. Specifically, in order to vary a high voltage generated by the DC voltage applying unit, a voltage variable DC-DC converter or a circuit for adjusting a voltage drop from a certain high voltage needs to be implemented by using high voltage components.

### SUMMARY OF THE INVENTION

The present invention is directed to providing a capacitive transducer drive device, which is capable of adjusting a potential difference between electrodes of a cell with a simple configuration, and the like.

A drive device for a capacitive transducer according to one embodiment of the present invention has the following feature.

That is, the drive device for a capacitive transducer includes a cell. The cell includes a vibrating membrane, a first electrode included in the vibrating membrane, and a second electrode formed to oppose the first electrode through intermediation of a gap. The drive device includes: a first DC voltage applying unit electrically connected to one of the first electrode and the second electrode included in the cell; and a second DC voltage applying unit electrically connected to another of the first electrode and the second electrode included in the cell. The second DC voltage applying unit is configured to apply, to the another of the first electrode and the second electrode, a voltage lower than a voltage applied to the one of the first electrode and the second electrode by the first DC voltage applying unit. The voltage applied by the second DC voltage applying unit is variable.

Further features of the present invention will become apparent from the following description of exemplary embodiments with reference to the attached drawings.

### BRIEF DESCRIPTION OF THE DRAWINGS

FIGS. 1A, 1B, and 1C are diagrams illustrating a capacitive transducer drive device according to a first embodiment of the present invention.
FIGS. 2A, 2B, and 2C are diagrams illustrating a capacitive transducer drive device according to a second embodiment of the present invention.
FIGS. 3A and 3B are diagrams illustrating the capacitive transducer drive device according to the second embodiment of the present invention.
FIG. 4 is a diagram illustrating a capacitive transducer drive device according to a third embodiment of the present invention.
FIGS. 5A, 5B, 5C, and 5D are graphs showing the capacitive transducer drive devices according to the third and fourth embodiments of the present invention.
FIG. 6 is a diagram illustrating the capacitive transducer drive device according to the fourth embodiment of the present invention.
FIGS. 7A and 7B are diagrams illustrating a capacitive transducer drive device according to a fifth embodiment of the present invention.
FIG. 8 is a diagram illustrating a capacitive transducer drive device according to a sixth embodiment of the present invention.
FIG. 9 is a diagram illustrating a capacitive transducer drive device according to a seventh embodiment of the present invention.
FIG. 10 is a diagram illustrating a capacitive transducer drive device according to an eighth embodiment of the present invention.
FIGS. 11A and 11B are diagrams illustrating an object information acquiring device according to a ninth embodiment of the present invention.
FIG. 12 is a diagram illustrating a related-art capacitive transducer.

### DESCRIPTION OF THE EMBODIMENTS

Embodiments of the present invention are described below. What are important in the present invention are that a high voltage Vh is applied to one of a first electrode and a second electrode included in a cell and a voltage Vl lower than Vh is applied to the other of the first electrode and the second electrode and that the low voltage Vl applied to the other electrode is varied to adjust a potential difference between the electrodes.

Now referring to the accompanying drawings, a capacitive transducer, a drive method therefor, and an information acquiring device, such as an ultrasound image forming device, according to the embodiments of the present invention are described in detail.

### First Embodiment

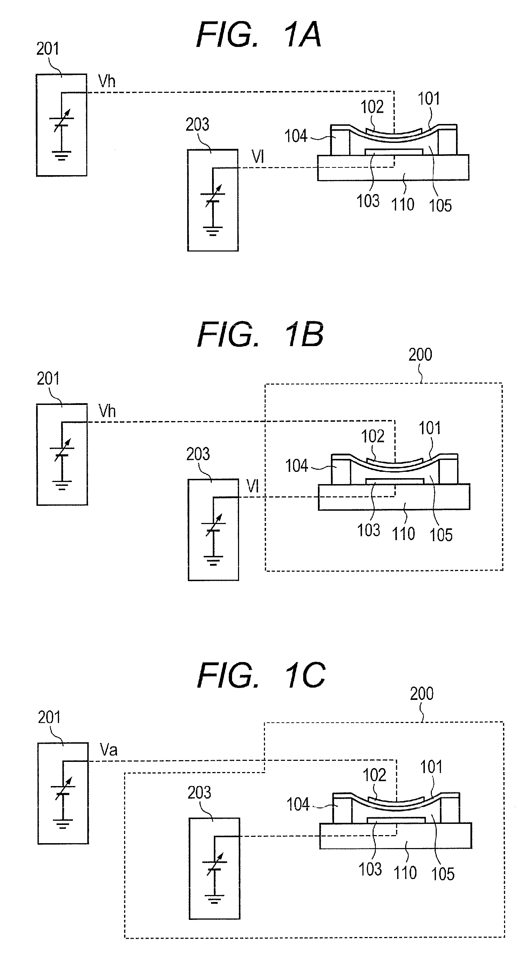

FIGS. 1A to 1C are diagrams illustrating a capacitive transducer drive device according to a first embodiment of the present invention. In FIGS. 1A to 1C, a first DC voltage applying unit (hereinafter referred to as "first applying unit") 201 and a second DC voltage applying unit (hereinafter referred to as "second applying unit") 203 are illustrated. The first applying unit 201 is capable of applying a high voltage Vh (about several tens of V to several hundreds of V). The first applying unit 201 is connected to a first electrode 102, and is capable of applying the high voltage Vh to the first electrode. The first electrode 102 is formed on, in, or under a vibrating membrane 101, or the vibrating membrane itself serves as an electrode. In other words, the first electrode 102 is included in the vibrating membrane 101 to vibrate together with the vibrating membrane 101. The second applying unit 203 is capable of applying a voltage Vl (several V to several tens of V) lower than Vh and varying the value of Vl. The second applying unit 203 is connected to a second electrode 103 that is formed to oppose the first electrode 102 through intermediation of a gap 105, and is capable of applying the variable voltage Vl to the second electrode. With this configuration, a potential difference (Vh-Vl) between the voltage Vh applied to the first electrode and the variable voltage Vl applied to the second electrode is applied between the electrodes of the CMUT. The second applying unit 203 varies the value of the low voltage Vl to be applied so that the potential difference may have a desired value. In this manner, the potential difference between the electrodes can be varied by the variable low voltage applying unit.

The gist of the present invention resides in that the first applying unit applies a high voltage of a fixed value and the second applying unit varies a low voltage to adjust the potential between the electrodes, thereby finally adjusting a high potential difference between the electrodes. A variable voltage applying unit for a low voltage can be implemented with a simpler configuration and a smaller size than those of a variable voltage applying unit for a high voltage. Specifically, the second applying unit 203 can be implemented easily with a commonly used circuit configuration of stepping down a predetermined voltage supplied from a low voltage power source. As an example, a dropper circuit (circuit utilizing a voltage drop in a resistor or a non-saturated transistor) or a chopper circuit (circuit designed to step down a voltage with a combination of a switching circuit and a smoothing circuit including an inductor and a capacitor) can be used. According to the present invention, the potential difference between the electrodes can be adjusted without varying a high voltage applied to one of the electrodes. Consequently, the capacitive transducer can be provided with a simple configuration. This transducer is capable of executing at least one of a function of transmitting an acoustic wave by vibrating the vibrating membrane in response to a transmission voltage signal or a function of receiving an acoustic wave in response to a reception current signal obtained when the first electrode vibrates in response to the acoustic wave.

It is to be noted that in FIGS. 1A to 1C, a high voltage is applied to the first electrode 102 located above an air gap or the gap 105, and a low voltage is applied to the second electrode 103 located under the gap 105. The present invention, however, is not limited to this configuration. The capacitive transducer can be used in the same manner even with a configuration in which a low voltage is applied to the first electrode 102 located above the gap 105 and a high voltage is applied to the second electrode 103 located under the gap 105. Further, a probe 200 equipped with the transducer may include only the transducer as illustrated in FIG. 1B or may include other elements (such as the second applying unit 203) together with the transducer as illustrated in FIG. 1C.

### Second Embodiment

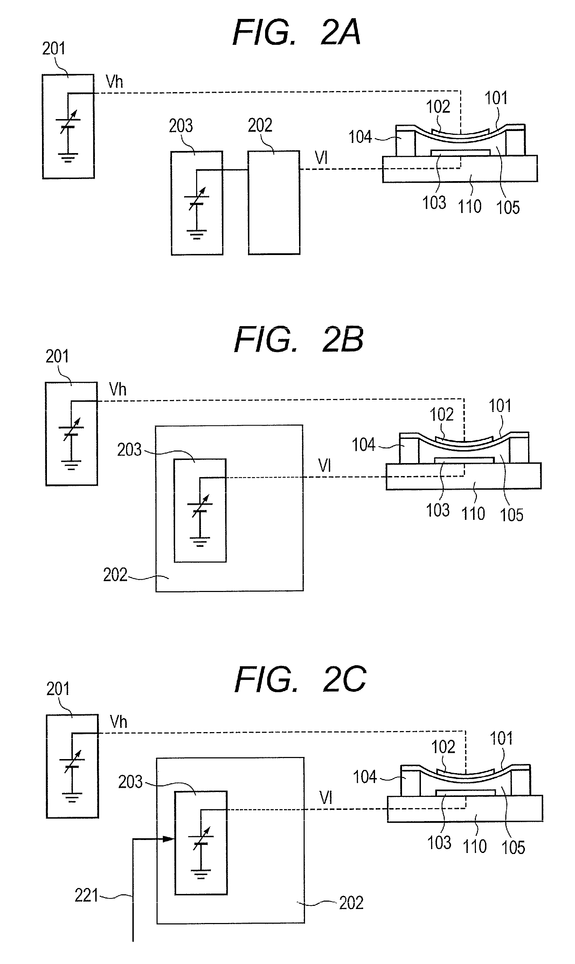

A second embodiment of the present invention differs from the first embodiment in a method of connecting the second electrode 103 and the second applying unit 203 to each other. The others are the same as those in the first embodiment. The feature of this embodiment resides in that the second applying unit 203 is connected to the second electrode 103 via a transceiver circuit. Details are described below. FIGS. 2A to 2C are schematic diagrams of a capacitive transducer according to this embodiment. In FIGS. 2A to 2C, a transceiver circuit 202 is illustrated.

The transceiver circuit 202 is connected to the second applying unit 203 and the second electrode 103. The transceiver circuit 202 inputs a low voltage V1 from the second applying unit 203, and applies the same voltage Vl to the second electrode 103. The transceiver circuit 202 has a function capable of applying an AC drive voltage to the second electrode 103 while applying the DC voltage Vl thereto, and a function capable of measuring a minute current generated in the second electrode 103 to extract a reception signal. With this, in a state in which transceiver operation is performed by the transceiver circuit 202, the potential difference between the opposed electrodes can be adjusted without varying a high voltage applied to the other electrode.

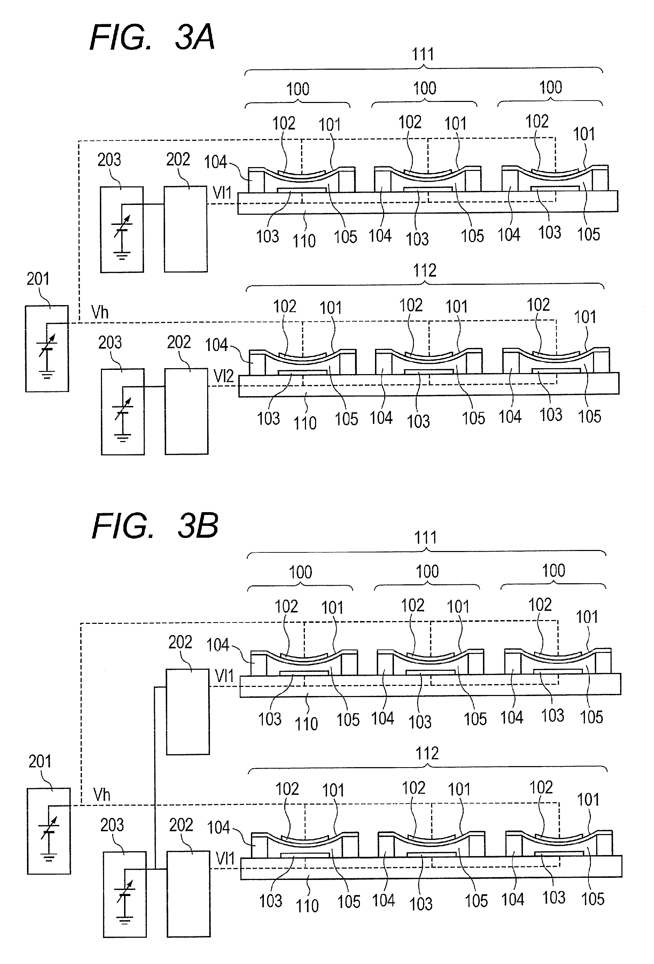

The second electrodes 103 can be electrically connected together in each different set of multiple cells 100 (the opposed first electrode 102 and second electrode 103 are paired as a unit). As illustrated in FIGS. 3A and 3B, a group of multiple cells 100 in which the second electrodes 103 are electrically connected together is referred to as "element 111 or 112" as a unit. The transceiver circuit 202 is provided for each element, and the second electrodes 103 in the element 111 or 112 are connected to the transceiver circuit 202 different for each element. Accordingly, the capacitive transducer is capable of performing different transceiver operation independently for each element, and the element is a unit of the transceiver operation.

FIGS. 3A and 3B are schematic diagrams each illustrating how the transceiver circuit 202 and the second applying unit 203 are connected to the element 111 or 112. As illustrated in FIG. 3A, the same number of the second applying units 203 as the number of the transceiver circuits 202 are provided, and the element is connected to the second applying unit 203 different for each transceiver circuit. With this, the potential difference between the opposed electrodes can be adjusted to an optimum magnitude for each element. Consequently, a high performance capacitive transducer can be provided. Alternatively, as illustrated in FIG. 3B, the transceiver circuits 202 for the multiple elements 111 and 112 may be connected to the same second applying unit 203. With this, the number of the second applying units 203 can be reduced to simplify the configuration as compared with the configuration in which the second applying unit 203 is provided for each transceiver circuit. Consequently, a more compact capacitive transducer can be provided. According to the capacitive transducer of this embodiment, it is only necessary to connect the second applying unit 203 to the transceiver circuit 202 without the need of changing the connection form between the second electrode 103 and the transceiver circuit 202. Consequently, the capacitive transducer can be easily realized without the need of changing the wiring form in the CMUT or the connection form between the CMUT and the transceiver circuit.

In the above, the configuration in which the second applying unit 203 is a separate member from the transceiver circuit 202 has been described. The present invention, however, is not limited to this configuration, and can employ another configuration. As illustrated in FIGS. 2B and 2C, the present invention can similarly employ a configuration in which the transceiver circuit 202 includes the second applying unit 203 inside. With this, it is unnecessary to form wiring to connect the transceiver circuit 202 and the second applying unit 203 to each other, thus further simplifying the configuration. In the configuration illustrated in FIG. 2B, for example, a unit configured to record a set value (for example, a variable resistor, a flash memory, or the like) is provided inside the transceiver circuit 202, and the magnitude of the low voltage to be applied from the second applying unit 203 is set based on the set value. With this, a different (optimum) low voltage can be set for each second applying unit 203. Alternatively, as illustrated in FIG. 2C, the set value for the magnitude of the low voltage to be applied from the second applying unit 203 may be input as a signal 221 from the outside. With this, the potential difference between the opposed electrodes can be adjusted as needed while the transceiver operation is performed, and hence a more advanced capacitive transducer can be provided.

### Third Embodiment

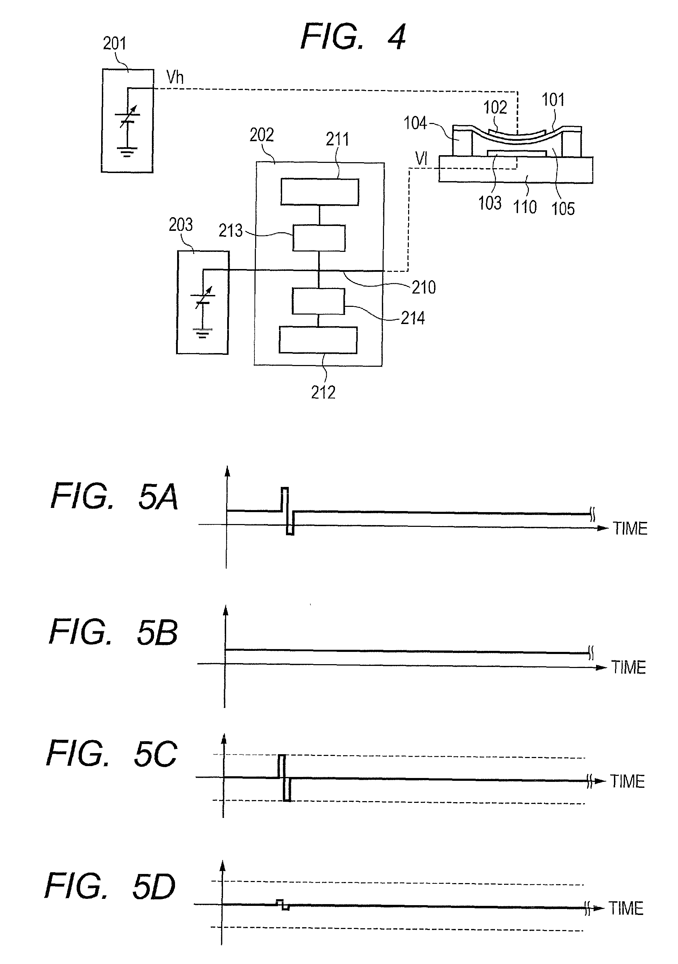

A third embodiment of the present invention differs from the second embodiment in the transceiver circuit. The others are the same as those in the second embodiment. In this embodiment, a description is given of a transceiver circuit 202 configured to perform transceiver operation at the same time when the voltage from the second applying unit 203 is applied to the second electrode 103. FIG. 4 is a schematic diagram of a capacitive transducer according to this embodiment. In FIG. 4, a transmission voltage generation unit 211, a reception current detection unit 212, and AC coupling units 213 and 214 are illustrated. The second applying unit 203 is directly connected to the second electrode 103 via wiring 210 formed inside the transceiver circuit.

FIGS. 5A to 5D are schematic graphs showing a voltage in the transceiver circuit 202. In FIGS. 5A to 5D, the horizontal axis represents time, and the vertical axis represents a voltage value. The transmission voltage generation unit 211 is capable of generating an AC drive voltage (see FIG. 5C). The transmission voltage generation unit 211 is connected to the second electrode 103 via the AC coupling unit 213. The AC coupling unit 213 is capable of applying an AC drive signal to the second electrode 103. On the other hand, a DC voltage from the second applying unit 203 is not transmitted to the transmission voltage generation unit 211 due to the AC coupling unit 213. Accordingly, the voltage applied from the second applying unit 203 has no effect on the voltage generated by the transmission voltage generation unit 211 or a signal during transmission.

The reception current detection unit 212 is capable of detecting the value of the current generated in the second electrode 103 and outputting the detected value as a detection signal. The reception current detection unit 212 is connected to the second electrode 103 via the AC coupling unit 214. The AC coupling unit 214 is capable of transmitting a current electrostatically induced in the second electrode 103 to the reception current detection unit 212. On the other hand, the DC voltage from the second applying unit 203 is not transmitted to the reception current detection unit 212 due to the AC coupling unit 214. Accordingly, the voltage applied from the second applying unit 203 has no effect on the voltage detected by the reception current detection unit 212 or a detection operation thereof.

Further, because the AC voltage generated from the transmission voltage generation unit 211 passes through the AC coupling unit 213, the magnitude of the AC voltage is set to be smaller than a withstanding voltage value of the reception current detection unit 212 when reaching an input terminal of the reception current detection unit 212 (see FIG. 5D). Accordingly, the reception current detection unit 212 is prevented from being damaged by the transmitted AC voltage. In this case, output impedance Zg of the second applying unit 203 has a value sufficiently higher than that of input impedance Zd of the reception current detection unit 212 (Zg>Zd) in the frequency region where the ultrasound wave is received. On the other hand, the value of the output impedance Zg is sufficiently lower than that of impedance Zc of the element of the CMUT (Zg<Zc). Consequently, the current generated by the second electrode 103 can be detected by the reception current detection unit 212 with high precision, thereby being capable of performing highly precise reception operation.

Further, the above-mentioned AC coupling units 213 and 214 can be constructed by using general-purpose capacitors. The frequency of AC coupling can be easily set to a desired value by selecting the capacitance of the capacitor. The AC coupling unit 214 is set so that the AC voltage in the reception current detection unit 212 from the transmission voltage generation unit 211 may be sufficiently low. Specifically, this is realized by setting impedance Zal of the AC coupling unit 214 to be higher than impedance Za2 of the AC coupling unit 213 (Za1>Za2) in the transmission frequency region. Further, the AC coupling unit 214 may use a configuration including a protective element formed of a high voltage switch having a function of preventing a voltage higher than a given voltage Vp from being transmitted to the terminal of the reception current detection unit 212.

According to the capacitive transducer of this embodiment, merely by adding a simple configuration, a voltage can be applied from the second applying unit 203 to the second electrode 103 while the transceiver operation is performed.

### Fourth Embodiment

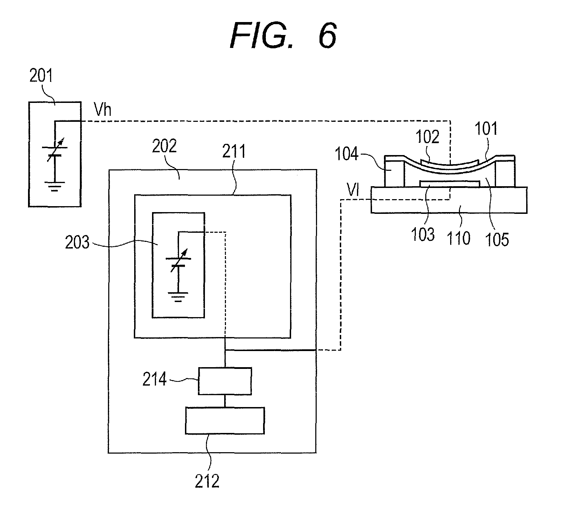

A fourth embodiment of the present invention differs from the second embodiment in the second applying unit 203. The others are the same as those in the second embodiment. The feature of this embodiment resides in that a unit configured to generate an AC drive voltage for the transceiver circuit is used to apply a variable low voltage. Details are described below. FIG. 6 is a schematic diagram of a capacitive transducer according to this embodiment. The transmission voltage generation unit 211 has also the function of the second applying unit 203, and is directly connected to the second electrode 103. The transmission voltage generation unit 211 is capable of varying a low DC voltage value and generating an AC drive voltage superimposed on the variable low DC voltage (see FIG. 5A).

In order to adjust the voltage applied between the opposed electrodes, a DC voltage value Vl is varied (see FIG. 5B). Further, in order to transmit an ultrasound wave, an AC waveform (see FIG. 5C) superimposed on the DC voltage is generated, to thereby generate the voltage shown in FIG. 5A. By applying this voltage to the second electrode 103, the potential difference between the electrodes can be adjusted to a predetermined value, and at the same time, the operation of transmitting the ultrasound wave can be performed. The transmission voltage generation unit 211 can be easily implemented by using a related-art ultrasound wave transmission circuit including a combination of a DA converter and an amplifier.

The reception current detection unit 212 is capable of detecting the value of the current generated in the second electrode 103 and outputting the detected value as a detection signal. The reception current detection unit 212 is connected to the second electrode via the AC coupling unit 214. The AC coupling unit 214 is capable of transmitting a current electrostatically induced in the second electrode 103 to the reception current detection unit 212. On the other hand, the DC voltage from the transmission voltage generation unit 211 is not transmitted to the reception current detection unit 212 due to the AC coupling unit 214.

Further, because the AC voltage generated from the transmission voltage generation unit 211 passes through the AC coupling unit 214, the magnitude of the AC voltage is set to be smaller than a withstanding voltage of the reception current detection unit 212 when reaching an input terminal of the reception current detection unit 212 (see FIG. 5D). Accordingly, the reception current detection unit 212 is prevented from being damaged by the transmitted AC voltage. Consequently, the DC voltage applied from the transmission voltage generation unit 211 has no effect on the detection voltage or detection operation of the reception current detection unit 212, and the reception current detection unit 212 is not damaged. In this case, output impedance Zg of the transmission voltage generation unit 211 during reception operation has a value sufficiently higher than that of the input impedance Zd of the reception current detection unit 212 (Zg>Zd) in the frequency region where the ultrasound wave is received. On the other hand, the value of the output impedance Zg is sufficiently lower than that of the impedance Zc of the element of the CMUT (Zg<Zc). Consequently, the current generated by the second electrode 103 can be detected by the reception current detection unit 212 with high precision, thereby being capable of performing highly precise reception operation.

Further, the above-mentioned AC coupling unit 214 can be constructed by using a general-purpose capacitor. The frequency of AC coupling can be easily set to a desired value by selecting the capacitance of the capacitor. Further, the AC coupling unit 214 is set so that the AC voltage in the reception current detection unit 212 may be sufficiently low. Specifically, this is realized by setting the impedance Za1 of the AC coupling unit 214 to be higher than impedance Zw of wiring between the transmission voltage generation unit 211 and the second electrode 103 (Za1>Zw) in the transmission frequency region. Further, the AC coupling unit 214 may use a configuration including a protective element formed of a high voltage switch having a function of preventing a voltage higher than a given voltage Vp from being transmitted to the terminal of the reception current detection unit 212. In the capacitive transducer according to this embodiment, the transmission voltage generation unit can be used in substitution for the second applying unit, and hence the potential difference can be adjusted with little increase in number of components.

### Fifth Embodiment

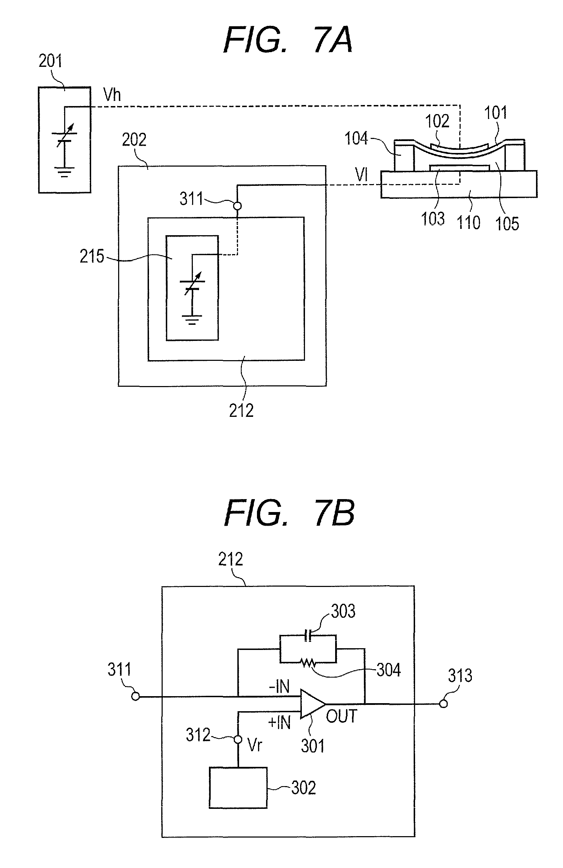

A fifth embodiment of the present invention differs from the second embodiment in that only the operation of receiving an ultrasound wave is performed and hence the second applying unit is different. The others are the same as those in the second embodiment. The feature of this embodiment resides in that a unit configured to measure a minute current of the transceiver circuit to extract a reception signal is used to generate a variable low voltage. Details are described below. FIG. 7A is a schematic diagram of a capacitive transducer according to this embodiment. In FIG. 7A, a reception current detection unit 212 and a reference potential generation unit 215 are illustrated.

The reception current detection unit 212 is connected to the second electrode 103. The reception current detection unit 212 has a reference potential used for detection, and an input terminal thereof is maintained at substantially the same potential as the reference potential. In this way, this embodiment utilizes the state in which the potential of the input terminal of the reception current detection unit 212 is set to be the same as the reference potential. The reception current detection unit 212 according to this embodiment includes a reference potential generation unit215 capable of varying the reference potential. By varying a DC voltage generated by the reference potential generation unit 215, the reference potential of the reception current detection unit 212 is varied. In response thereto, the potential of the input terminal of the reception current detection unit 212 varies, and hence the DC voltage related to the second electrode 103 connected to this potential can be adjusted. In this case, the voltage generated by the reference potential generation unit 215 has a value within a voltage range in which the reception current detection unit 212 performs the detection operation.

Further, the reception current detection unit 212 is capable of detecting the value of the current electrostatically induced in the second electrode 103 and outputting the detected value as a detection signal. In this case, the input impedance Zd of the reception current detection unit 212 has a value sufficiently lower than the impedance Zc of the element of the CMUT (Zc>Zd) in the frequency region where the ultrasound wave is received. Consequently, the current generated by the second electrode 103 can be detected by the reception current detection unit 212 with high precision, thereby being capable of performing highly precise reception operation. In this manner, by using the reception current detection unit 212 according to this embodiment, the potential difference between the opposed electrodes can be adjusted at the same time when the reception operation is performed.

FIG. 7B is a schematic diagram illustrating the reception current detection unit 212 and the reference voltage generation source 302 (reference potential generation unit 215 of FIG. 7A). In FIG. 7B, the reception current detection unit 212 is a transimpedance circuit using an operational amplifier. An inverting input terminal (-IN) 311 of an operational amplifier 301 is connected to a resistor 303 and a capacitor 304 connected in parallel, and an output signal of an output terminal (OUT) 313 thereof is fed back to the inverting input terminal (-IN) 311. A non-inverting input terminal (+IN) 312 of the operational amplifier 301 is connected to the reference voltage generation source 302 as a reference potential terminal. The operational amplifier 301 operates so that a potential difference between the inverting input terminal (-IN) 311 and the non-inverting input terminal (+IN) 312 may be zero. With this function, a current input from the inverting input terminal (-IN) 311 can be extracted as an output voltage. Further, a voltage Vr generated by the reference voltage generation source 302 (215) connected to the non-inverting input terminal (+IN) 312 is applied to the second electrode (Vl=Vr). In other words, by varying the voltage Vr generated by the reference voltage generation source 302 (215), the potential difference between the opposed electrodes of the cell can be varied.

The capacitive transducer according to this embodiment is capable of adjusting the potential difference between the electrodes simply by adding the reference potential generation unit 215 in the reception circuit. Further, the reference voltage generation source only needs to generate a low variable voltage, and hence the circuit integration is facilitated, and a more compact capacitive transducer can be provided.

### Sixth Embodiment

A sixth embodiment of the present invention relates to a method of adjusting the potential difference between the opposed electrodes of the cell. The others are the same as those in any one of the first to fifth embodiments. The feature of this embodiment resides in that the potential difference between the electrodes is adjusted so that transceiver characteristics may be uniform among elements. Details are described below.

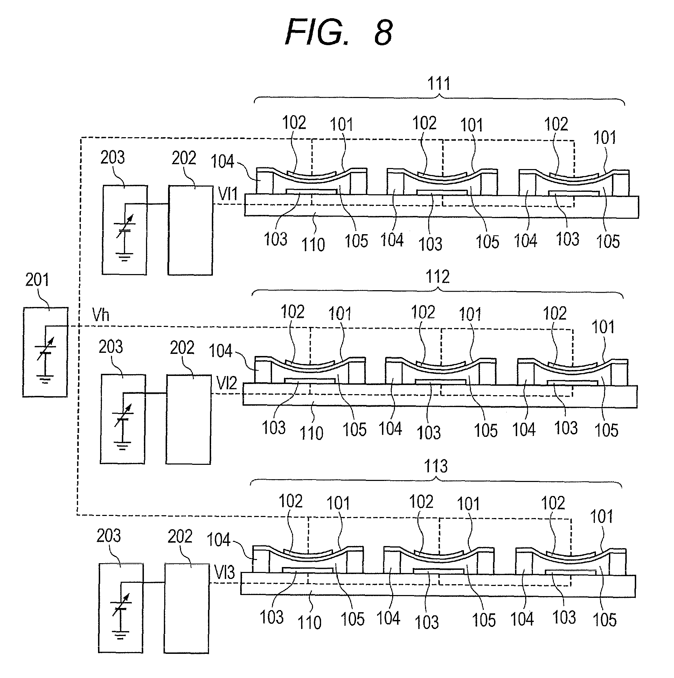

FIG. 8 is a schematic diagram of a capacitive transducer according to this embodiment. In this embodiment, the second applying unit 203 is provided for each element. Voltages Vl1, Vl2, and Vl3 are adjusted by the respective second applying units 203 in accordance with the transceiver characteristics of the elements 111, 112, and 113. Specifically, when transmission efficiency or reception sensitivity of one element is lower than that of the other elements, the voltage Vl to be generated is decreased to increase the potential difference between the electrodes, to thereby increase the transmission efficiency or the reception sensitivity during operation. On the other hand, the transmission efficiency or the reception sensitivity of one element is higher than that of the other elements, the voltage Vl to be generated is increased to reduce the potential difference between the electrodes, to thereby reduce the transmission efficiency or the reception sensitivity during operation. Consequently, even when multiple elements whose original transmission efficiencies or reception sensitivities are different from one another are used at the same time, the transceiver operation can be performed with substantially the same transmission efficiency or reception sensitivity.

According to this embodiment, the capacitive transducer capable of performing the transceiver operation with uniform transceiver characteristics even when the transceiver characteristics vary among elements can be provided.

### Seventh Embodiment

A seventh embodiment of the present invention relates to a method of adjusting the potential difference between the electrodes. The others are the same as those in any one of the first to fifth embodiments. The feature of this embodiment resides in that the applied potential difference between the electrodes differs among the elements depending on the type of shape of the cell included in the element. Details are described below.

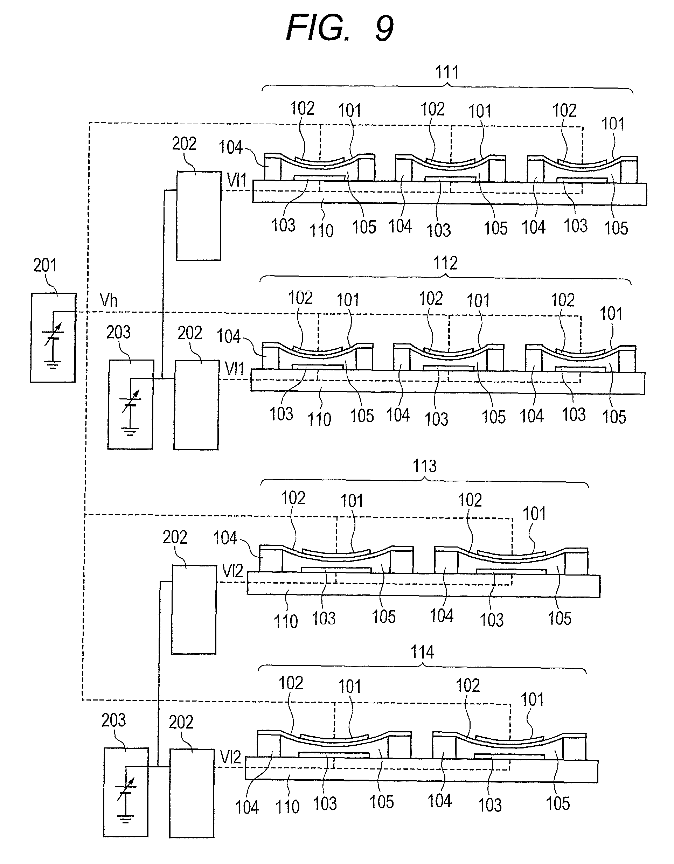

FIG. 9 is a schematic diagram of a capacitive transducer according to this embodiment. A description is hereinafter given of elements including cells whose diameters are only different. However, the same is true even when there is a difference in other factors of the cell structure (vibrating membrane thickness, vibrating membrane material, gap height, electrode thickness, electrode material). In the CMUTs having the same layer configuration, the potential difference necessary for operation becomes larger as the cell diameter of the element becomes smaller. On the other hand, the potential difference necessary for operation becomes smaller as the cell diameter of the element becomes larger. For the element 111 having a small cell diameter, a voltage Vl1 applied from the second applying unit 203 is set to be low so that the potential difference may be large. For the element 113 having a large cell diameter, a voltage V12 applied from the second applying unit 203 is set to be high so that the potential difference may be small.

As described above, even in the capacitive transducer including the elements having different cell diameters, optimum potential differences can be applied depending on the respective cell diameters. In other words, the capacitive transducer includes the multiple elements, and the second applying unit is capable of applying a different DC voltage for each different element having the same cell shape. Consequently, for the elements having different cell shapes, desired transceiver characteristics can be obtained for each cell shape. According to this embodiment, the capacitive transducer capable of performing the transceiver operation with transceiver characteristics suitable for each element having different cell shapes can be provided.

### Eighth Embodiment

An eighth embodiment of the present invention relates to a method of adjusting the potential difference between the electrodes. The others are the same as those in any one of the first to fifth embodiments. The feature of this embodiment resides in that a voltage applied to peripheral elements that are performing transceiver operation differs from a voltage applied to the other central elements. Details are described below.

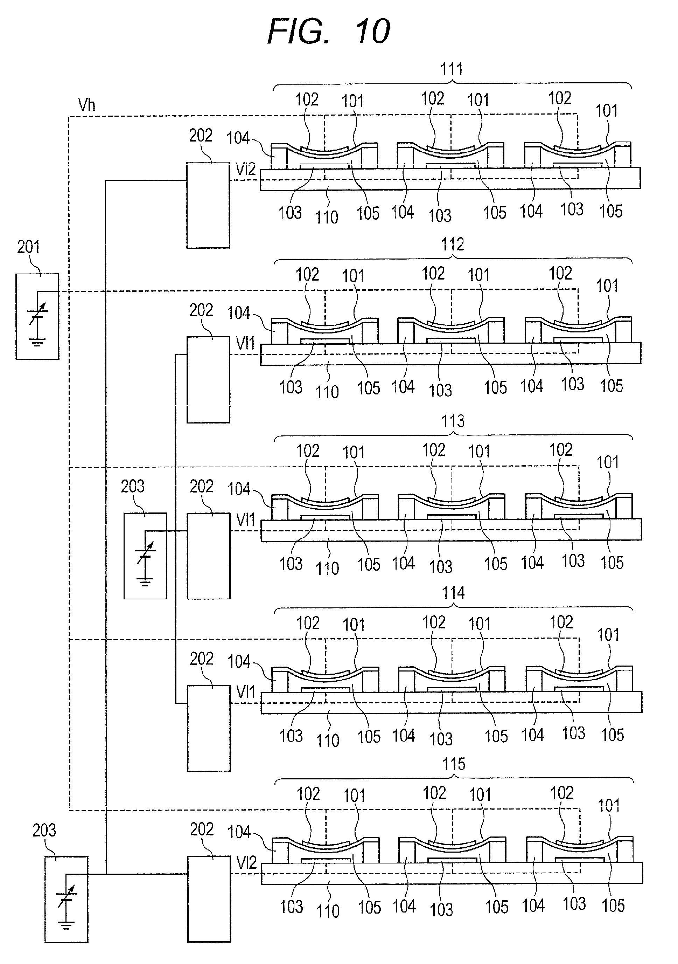

FIG. 10 is a schematic diagram of a capacitive transducer according to this embodiment. In FIG. 10, elements 111, 112, 113, 114, and 115 are arranged in this order. In the following, a description is given of a configuration in which the elements 111, 112, 113, 114, and 115 perform transmission operation substantially at the same time. The elements 111, 112, 113, 114, and 115 are each applied with the transmission voltage shown in FIG. 5C with a slight time lag. The time lag is set so that ultrasound waves transmitted from the respective elements may reach a slightly distant location at the same time. With this, the ultrasound waves transmitted from the multiple elements are beam-formed. In this specification, it is defined that, when the transmission operation is performed by the multiple elements applied with the AC voltage with such time lag, the multiple elements perform the transmission operation substantially at the same time.

A voltage Vl2 applied to the side elements 111 and 115 that are performing the transceiver operation is set to be higher than a voltage Vl1 applied to the other elements 112, 113, and 114. With this, transmission efficiency or reception sensitivity of the side elements 111 and 115 can be set to be lower than transmission efficiency or reception sensitivity of the other elements 112, 113, and 114. Consequently, the side lobe of the ultrasound wave, which occurs when the ultrasound wave is transmitted and received with use of multiple elements, can be reduced.

The capacitive transducer according to this embodiment is capable of easily reducing the side lobe that occurs when the transceiver operation is performed by the multiple elements. Consequently, the capacitive transducer capable of transmitting and receiving an almost ideal ultrasound beam can be provided.

### Ninth Embodiment

A ninth embodiment of the present invention relates to an object information acquiring device such as an ultrasound image forming device using the capacitive transducer described in any one of the first to eighth embodiments. In FIG. 11A, an object (measuring object) 402, a capacitive transducer 403, an image reproduction device 404 as an image information generation device, and an image display portion 405 are illustrated. Further, a transmitted ultrasound wave 501, a received ultrasound wave 502, ultrasound transmitted information 503, an ultrasound received signal 504, reproduced image information 505, and an ultrasound image forming device 400 are illustrated.

The ultrasound wave 501, which is output from the capacitive transducer 403 toward the object to be measured 402, is reflected on a surface of the object to be measured 402 due to a difference in specific acoustic impedance at an interface of the object to be measured 402. The reflected ultrasound wave 502 is received by the capacitive transducer 403, and information on the magnitude, shape, and time of the received signal is transmitted to the image reproduction device 404 as the ultrasound received signal 504. On the other hand, information on the magnitude, shape, and time of the transmitted ultrasound wave is transmitted to the image reproduction device 404 as the ultrasound transmitted information 503. The image reproduction device 404 reproduces an image of the object to be measured 402 based on the ultrasound received signal 504 and the ultrasound transmitted information 503, and transmits the image as the reproduced image information 505, which is then displayed on the image display portion 405.

The capacitive transducer 403 according to this embodiment uses the CMUT described in any one of the first to fifth embodiments. With this, the element is adjusted to have desired transceiver characteristics, and the ultrasound wave can be transmitted and received more accurately. Consequently, more accurate information on the ultrasound wave reflected on the object to be measured 402 can be obtained, thereby being capable of reproducing the object to be measured 402 more accurately.

Further, as another configuration of this embodiment, as illustrated in FIG. 11B, an ultrasound wave generated with use of another transmission sound source 401 can be detected by the capacitive transducer 403 with high precision. Still further, a light source may be used to irradiate the object to be measured with light, and an ultrasound wave (photoacoustic wave) generated by photoacoustic effect may be received by the capacitive transducer 403. In the present invention, the capacitive transducer 403 can be used as a receiving element irrespective of the type of transmission sound source as described above.

According to this embodiment, the object information acquiring device such as an ultrasound image forming device capable of reproducing image information with high precision can be provided. As described above, the image forming device according to this embodiment includes the capacitive transducer of the present invention configured to perform at least one of transmission of an acoustic wave to an object or reception of an acoustic wave from the object. Then, the image information generation device generates image information on the object by using at least one of a transmitted signal or a received signal to or from the transducer. Further, the information acquiring device as described above includes the capacitive transducer of the present invention and a processor configured to acquire information on the object by using an electric signal output from the transducer. Then, the transducer may be configured to receive an acoustic wave from the object and output an electric signal. Still further, the information acquiring device as described above may include the capacitive transducer of the present invention, a light source, and a data processing device. Then, the transducer receives an acoustic wave that is generated when the object is irradiated with light oscillated from the light source, and converts the received acoustic wave into an electric signal. The data processing device acquires information on the object by using the electric signal.

### Other Embodiments

Embodiments of the present invention can also be realized by a computer of a system or apparatus that reads out and executes computer executable instructions recorded on a storage medium (e.g., non-transitory computer-readable storage medium) to perform the functions of one or more of the above-described embodiment(s) of the present invention, and by a method performed by the computer of the system or apparatus by, for example, reading out and executing the computer executable instructions from the storage medium to perform the functions of one or more of the above-described embodiment(s). The computer may comprise one or more of a central processing unit (CPU), micro processing unit (MPU), or other circuitry, and may include a network of separate computers or separate computer processors. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

According to the present invention, the capacitive transducer drive device, which is capable of adjusting the potential difference applied between the electrodes of the cell with a simple configuration, and the like can be provided.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

Provided is a capacitive transducer drive device capable of adjusting a potential difference applied between electrodes of a cell with a simple configuration. A capacitive transducer to be driven by the drive device includes a cell including: a first electrode (102) included in a vibrating membrane (101); and a second electrode (103) formed to oppose the first electrode through intermediation of a gap (105). One of the first electrode (102) and the second electrode (103) of the cell is electrically connected to a first DC voltage applying unit (201), and the other of the first electrode (102) and the second electrode (103) of the cell is electrically connected to a second DC voltage applying unit (203). A voltage to be applied by the second DC voltage applying unit is set to be lower than a voltage to be applied by the first DC voltage applying unit. The voltage to be applied by the second DC voltage applying unit (203) is variable.

## Claims

1. A drive device for a capacitive transducer,
the capacitive transducer comprising a cell,
the cell comprising a vibrating membrane, a first electrode included in the vibrating membrane, and a second electrode formed to oppose the first electrode through intermediation of a gap,
the drive device comprising:
a first DC voltage applying unit electrically connected to one of the first electrode and the second electrode included in the cell; and
a second DC voltage applying unit electrically connected to another of the first electrode and the second electrode included in the cell,
wherein the second DC voltage applying unit is configured to apply, to the another of the first electrode and the second electrode, a voltage lower than a voltage applied to the one of the first electrode and the second electrode by the first DC voltage applying unit, and
wherein the voltage applied by the second DC voltage applying unit is variable.

2. The drive device for a capacitive transducer according to claim 1, which is configured to execute at least one of a function of transmitting an acoustic wave by vibrating the vibrating membrane in response to a transmission voltage signal or a function of receiving an acoustic wave in response to a reception current signal obtained when the first electrode vibrates in response to the acoustic wave.

3. The drive device for a capacitive transducer according to claim 1 or 2, further comprising a transceiver circuit comprising at least one of a transmission voltage generation unit or a reception current detection unit,
wherein the transceiver circuit is connected for each element, the element being a group of at least one cell in which the second electrode of the at least one cell is electrically connected, and
wherein the second DC voltage applying unit is connected to the second electrode via the transceiver circuit.

4. The drive device for a capacitive transducer according to claim 3,
wherein the second DC voltage applying unit is connected to the second electrode via wiring included in the transceiver circuit, and
wherein the transmission voltage generation unit is connected to the wiring via an AC coupling unit, and the reception current detection unit is connected to the wiring via another AC coupling unit.

5. The drive device for a capacitive transducer according to claim 3, wherein the transmission voltage generation unit comprises the second DC voltage applying unit.

6. The drive device for a capacitive transducer according to claim 3, wherein the reception current detection unit comprises the second DC voltage applying unit.

7. The drive device for a capacitive transducer according to any one of claims 3 to 6, which is configured to vary a DC voltage to be applied by the second DC voltage applying unit to adjust a potential difference between the first electrode and the second electrode so that the potential difference is close to characteristics of at least one of transmission efficiency or reception sensitivity of the element.

8. The drive device for a capacitive transducer according to any one of claims 3 to 7,
wherein the capacitive transducer comprises a plurality of the elements, and
wherein the second DC voltage applying unit is configured to apply a DC voltage that is different for each different element having the same shape of the cells.

9. The drive device for a capacitive transducer according to any one of claims 3 to 8, which is configured to set, in a plurality of the elements that perform transmission operation substantially at the same time, voltages to be applied by the second DC voltage applying unit to the plurality of the elements to have different values between peripheral elements and central elements of the plurality of the elements.

10. An object information acquiring device, comprising:
the drive device for a capacitive transducer according to any one of claims 1 to 9; and
a processor configured to acquire information on an object by using an electric signal output from the capacitive transducer,
wherein the capacitive transducer is configured to receive an acoustic wave from the object and output the electric signal.

11. An object information acquiring device, comprising:
the drive device for a capacitive transducer according to any one of claims 1 to 9;
a light source; and
a data processing device,
wherein the capacitive transducer is configured to receive an acoustic wave generated by light that is oscillated from the light source to irradiate an object, and convert the received acoustic wave into an electric signal, and
wherein the data processing device is configured to acquire information on the object by using the electric signal.

12. A method of driving a capacitive transducer,
the capacitive transducer comprising a cell,
the cell comprising a vibrating membrane, a first electrode included in the vibrating membrane, and a second electrode formed to oppose the first electrode through intermediation of a gap,
the method comprising:
setting a voltage applied to another of the first electrode and the second electrode included in the cell to be lower than a voltage applied to one of the first electrode and the second electrode included in the cell; and
varying the voltage applied to the another of the first electrode and the second electrode.
